**Europäisches Patentamt**

**European Patent Office**

**Office européen des brevets**

(11) Veröffentlichungsnummer: **0 040 697**
**A1**

(12) # EUROPÄISCHE PATENTANMELDUNG

(21) Anmeldenummer: **81103084.0**

(22) Anmeldetag: **24.04.81**

(51) Int. Cl.³: **F 15 B 13/01, B 23 B 31/30**

(30) Priorität: **28.05.80 DE 3020184**

(43) Veröffentlichungstag der Anmeldung: **02.12.81**
**Patentblatt 81/48**

(84) Benannte Vertragsstaaten: **AT BE CH DE FR GB IT LI NL SE**

(71) Anmelder: **SMW Schneider & Weisshaupt GmbH, Wiesentalstrasse 28, D-7996 Meckenbeuren (DE)**

(72) Erfinder: **Hiestand, Karl, Mühlweg 2, D-7789 Pfullendorf (DE)**

(74) Vertreter: **Engelhardt, Guido, Ehlersstrasse 17, D-7990 Friedrichshafen1 (DE)**

(54) **Vorrichtung zur Druckabsenkung.**

(57) Zur Druckabsenkung in einem Druckraum (6) eines Spannzylinders (2) od. dgl. mit einem in dessen Druckmittelzuführungsleitung (10) eingesetzten Absperrventil (21) ist der der grösseren Fläche (33) eines als Differenzkolben ausgebildeten Steuerkolbens (31) zugeordnete Druckraum (34) mittels einer Zweigleitung (51) und eines in diese eingesetzten Wegeventils (52) bei einer Druckmittelzuführung in den Druckraum (6) des Spannzylinders (2) entlüftbar und bei einer Druckabsenkung an dessen Druckmittelzuführungsleitung (10) anschließbar. Durch diese Ausgestaltung wird erreicht, daß das einem Druckraum zugeordnete Absperrventil, sobald die Druckmittelzufuhr in diesem Druckraum beendet ist, durch die Kraft der auf den Ventilkörper einwirkenden Feder sofort geschlossen wird, so daß der aufgebaute Druck in voller Höhe erhalten bleibt. Durch Leckverluste oder durch eine Beschädigung der Druckmittelzuführungsleitung kann demnach kein Druckabfall auftreten. Der eingesperrte Druck steht vielmehr immer zur Verfügung.

Soll aber dennoch, z. B. um die Spannkraft zu reduzieren, der Druck in einem Druckraum abgesenkt werden, so kann dies in sehr kurzer Zeit mittels des dem Absperrventil vorgeschalteten Wegeventils bei einfacher Handhabung vorgenommen werden.

SMW Schneider & Weißhaupt GmbH
7996 Meckenbeuren

## Vorrichtung zur Druckabsenkung

Die Erfindung bezieht sich auf eine Vorrichtung zur Druckabsenkung in einem Druckraum eines Spannzylinders od.dgl. mit einem in dessen Druckmittelzuführungsleitung eingesetzten Absperrventil, dessen Ventilkörper durch die Kraft einer Feder entgegen der Strömungsrichtung des Druckmittels belastet und durch einen als Differenzkolben ausgebildeten Steuerkolben verstellbar ist, und ist in vorteilhafter Weise für einen umlaufenden doppelt wirkenden Druckmittelzylinder zur Betätigung von Spannzeugen an Werkzeugmaschinen mit zwei Rückschlagventilen, die jeweils in einer Zuleitung zu einer Zylinderkammer angeordnet sind, verwendbar.

Eine derartige Steuervorrichtung für umlaufende doppelt wirkende Druckmittelzylinder ist durch die DE-PS 22 45 796 bekannt. Die Absperrventile sind bei dieser Ausgestaltung jedoch ständig geöffnet, da die als Differenzkolben ausgebildete Steuerkolben, die in einer verschiebbaren Zylinderbüchse gelagert sind, bei einer Druckmittelzuführung ebenfalls dauernd beaufschlagt werden und somit der Ven-

./.

tilkörper von dem Ventilsitz abgehoben ist. Bei geöffnetem Absperrventil kann demnach zwar eine Druckabsenkung in der jeweils unter Druck stehenden Zylinderkammer durch Vermindern des Druckes in der Zuleitung vorgenommen werden, um die Spannkraft der Spannbacken nach einem bestimmten Arbeitsvorgang, beispielsweise nach dem Schruppen eines Werkstückes, vor dem nächsten Arbeitsgang z.B. dem Schlichten zur Vermeidung von Werkstückbeschädigungen herabzusetzen, bei einem vollständigen Druckausfall ist der Druckabfall in der unter Druck stehenden Zylinderkammer jedoch erheblich. Bis nämlich der Steuerkolben derart verschoben ist, dass der Ventilkörper auf dem Ventilsitz aufliegt, ist eine Zeitverzögerung in Kauf zu nehmen, in der ein Druckabbau stattfindet, so dass in der zugeordneten Zylinderkammer ein mitunter nicht unerheblicher Druckabfall unvermeidbar ist. Des weiteren ist von Nachteil, dass, wiederum bedingt durch das ständig geöffnete Absperrventil, ein stetiger Druckabfall in der Druckmittelzuführungsleitung,der beispielsweise durch eine Leckstelle hervorgerufen werden kann, sich auch auf den Druck in der Zylinderkammer auswirkt. Erst wenn ein derartiger Druckabfall eintritt, dass durch die Kraft der Ventilfeder die Absperrventile geschlossen werden, bleibt der Druck in den Zylinderkammern erhalten. Eine Druckabsenkung unter einen durch die Wahl der Federn bestimmten Wert ist somit nicht möglich. Und da die Ventilfedern der Fliehkraft unterworfen sind und ständig mechanisch beansprucht werden, ist eine zufriedenstellende ungestörte Funktion dieser Steuervorrichtung nicht gewährleistet.

Es ist daher Aufgabe der Erfindung, eine Steuervorrichtung zu schaffen, mittels der nicht nur der Druck in einem Druckraum,und zwar auf jeden vorgegebenen Druck zuverlässig abgesenkt werden kann, sondern durch die auch

./.

sichergestellt ist, dass der in einem Druckraum aufgebaute Druck in voller Höhe erhalten bleibt, so dass
Druckverluste im Druckmittelsystem keinen Einfluss ausüben können. Das einem Druckraum zugeordnete Absperrventil soll demnach nur bei einer Druckmittelzufuhr oder
einer Druckabsenkung geöffnet, sonst aber ständig geschlossen sein, um einen Druckabfall in dem Druckraum
durch verzögertes Schliessen bei einem Druckausfall
durch Leckverluste oder auf den Ventilkörper oder die
Ventilfeder einwirkende Zentrifugalkräfte mit Sicherheit auszuschliessen. Der Bauaufwand sowie der Raumbedarf,der erforderlich ist, um dies zu bewerkstelligen,
soll sehr gering gehalten werden, dennoch soll eine hohe
Betriebssicherheit gewährleistet sein.

Gemäss der Erfindung wird dies dadurch erreicht, dass
der der grösseren Fläche des Steuerkolbens zugeordnete
Druckraum mittels einer Zweigleitung und eines in diese
eingesetzten Wegeventils bei einer Druckmittelzuführung
in den Druckraum des Spannzylinders entlüftbar und bei
einer Druckabsenkung an dessen Druckmittelzuführungsleitung anschliessbar ist.

Wird die Vorrichtung für einen umlaufenden doppelt wirkenden Druckmittelzylinder zur Betätigung von Spannzeugen an Werkzeugmaschinen mit zwei Rückschlagventilen,
die jeweils in einer Zuleitung zu einer Zylinderkammer
angeordnet sind, verwendet, ist es angebracht, jedes Absperrventil mit einem auf dessen Ventilkörper einwirkenden Steuerkolben zu versehen, deren den grösseren von
Druckmittel beaufschlagten Flächen zugeordneten Druckräume ständig mit dem Abströmkanal des in die Druckmittelzuführungsleitung der anderen Zylinderkammer einge-

./.

setzten Absperrventils verbunden sind, und in jeder
Druckmittelzuführungsleitung ein Wegeventil anzuordnen,
mittels denen bei einer Druckmittelzuführung in eine der
Zylinderkammern die andere Zylinderkammer über deren
durch den von Druckmittel beaufschlagten Steuerkolben
geöffnetem Absperrventil entlüftet und zur Druckabsenkung beide Zylinderkammern über die durch die von
Druckmittel beaufschlagten Steuerkolben bei geöffneten
Absperrventilen an die Druckmittelzuführungsleitungen
anschliessbar sind.

Vorteilhaft ist es des weiteren, die beiden Absperrventile mit den jeweils zugeordneten Steuerkolben einander
gegenüberliegend radial oder axial gerichtet in einem Abschlussdeckel des Druckmittelzylinders oder der Zylinderwandung
und den Ventilkörper des Absperrventils und den Steuerkolben jeweils axial hintereinander in einer ein- oder
mehrteiligen Hülse verschiebbar anzuordnen.

Die auf den Ventilkörper des Absperrventils einwirkende
Feder ist in ihrer Kraft nur geringfügig grösser zu bemessen als der Ventilkörper in seinem Gewicht, damit
dieser, sobald kein Druckmittel mehr strömt,
an der Ventilfläche zur Anlage kommt und das Absperrventil somit sofort geschlossen ist.

Zweckmässig ist es des weiteren, den Wegeventilen zum
Anschluss der Druckleitungen an Druckmittel in unterschiedlichen Druckhöhen führende Leitungen ein Umschaltventil vorzuschalten. Selbstverständlich kann die Druckherabsetzung aber auch durch Mindern des Druckes in der
Druckmittelleitung vorgenommen werden.

./.

Die gemäss der Erfindung ausgebildete Vorrichtung zur Druckabsenkung ist nicht nur sehr einfach in der konstruktiven Ausgestaltung und damit auf wirtschaftliche Weise zu verwirklichen, sondern durch diese Steuervorrichtung ist vor allem gewährleistet, dass der in einem Druckraum aufgebaute Druck stets in voller Höhe erhalten bleibt, aber im Bedarfsfall dennoch abgesenkt werden kann. Durch die im Anspruch 1 bzw. im Anspruch 2 angegebene Ausgestaltung wird nämlich erreicht, dass das einem Druckraum zugeordnete Absperrventil, sobald die Druckmittelzufuhr in diesen Druckraum beendet ist, durch die Kraft der auf den Ventilkörper einwirkenden Feder sofort geschlossen wird. Es ist damit auf sehr einfache Weise sichergestellt, dass durch Leckverluste in den Zuführungsleitungen oder bei einer Beschädigung kein Druckabfall und somit auch keine Spannkraftverluste in Kauf genommen werden müssen. Der eingesperrte Druck steht vielmehr immer zur Verfügung. Soll aber dennoch, z.B. um die Spannkraft zu reduzieren, der Druck in einem Druckraum abgesenkt werden, so kann dies in sehr kurzer Zeit mittels des dem Absperrventil vorgeschalteten Wegeventils bei einfacher Handhabung vorgenommen werden. Die Steuervorrichtung bietet somit eine hohe Sicherheit gegen das Abfallen des Druckes in einen Druckraum bei einer Unterbrechung der Druckmittelzufuhr, ermöglicht es aber auch, dass das Absperrventil gegenüber dem hohen eingesperrten Druckmitteldruck zu öffnen ist.

Weitere Einzelheiten sind den in der Zeichnung dargestellten Ausführungsbeispielen zweier gemäss der Erfindung ausgebildeter Vorrichtungen zur Druckabsenkung, die nachfolgend im einzelnen erläutert sind, zu entnehmen.

Hierbei zeigen:

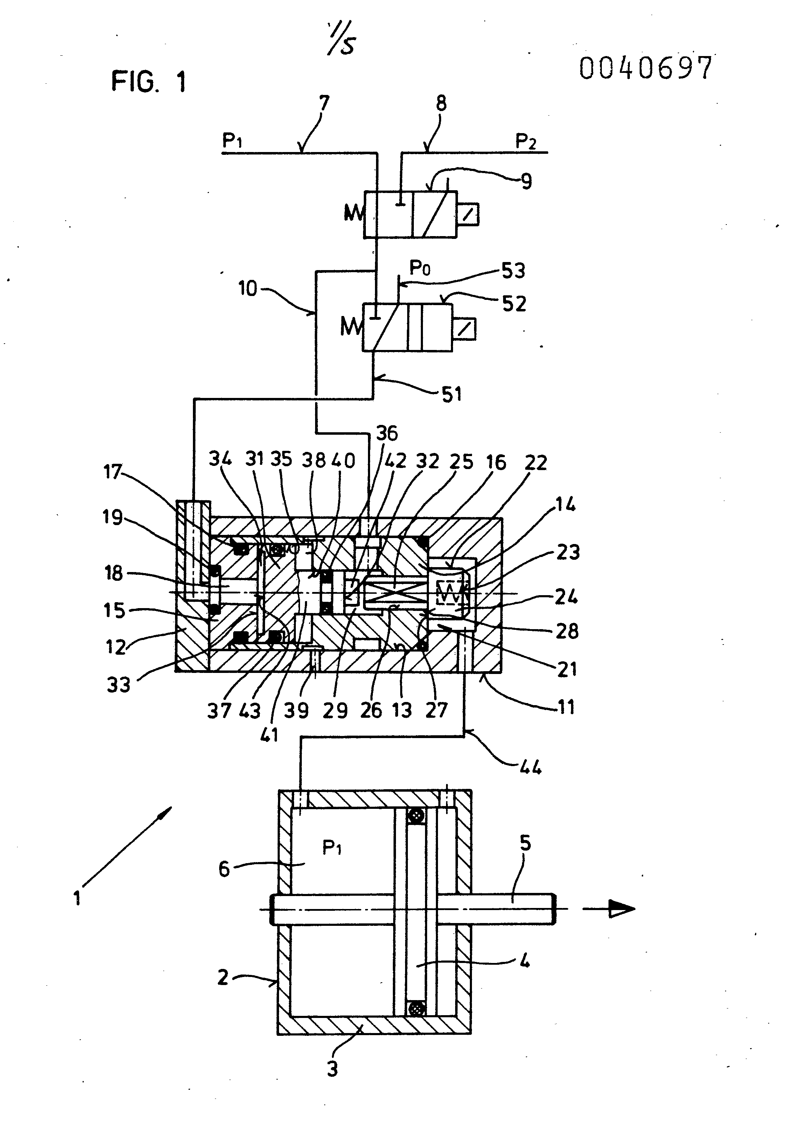

Fig. 1   eine einem einfach wirkenden Spannzylinder
         zugeordnete Steuervorrichtung und

Fig. 2
bis 5    eine einem doppelt wirkenden Druckmittelzylinder zugeordnete Steuervorrichtung in
         unterschiedlichen Schaltstellungen.

Die in Fig. 1 dargestellte und mit 1 bezeichnete Vorrichtung zur Absenkung des Druckes in einem Druckraum 6
eines Spannzylinders 2, in dessen Gehäuse 3 ein über eine
Kolbenstange 5 z.B. mit einem Spannfutter verbundener
Kolben⁴ eingesetzt ist, besteht im wesentlichen aus einem
Absperrventil 21, einem diesem zugeordneten Steuerkolben 31
sowie einem Wegeventil 52, mittels dem über eine Zweigleitung 51 zur Druckabsenkung der Steuerkolben 31 von
Druckmittel beaufschlagbar ist. Der Ventilkörper 22 des
Absperrventils 21 sowie der als Differenzkolben ausgebildete Steuerkolben 31 sind hierbei axial verschiebbar
hintereinander in einer Hülse 14 angeordnet, die in einer
in einen Zylinderdeckel 11 des Spannzylinders 2 eingearbeiteten Stufenbohrung 13 eingesetzt ist. Die Druckmittelzuleitung in den der grösseren Kolbenfläche 33 zugeordneten
Druckraum 34 des Steuerkolbens 31 erfolgt über die in der
Zylinderwandung 12 vorgesehenen Zweigleitung 51 sowie
einen in die Hülse 14 und die Bohrung 13 eingesetzten
Verschlußstopfen 15, der eine zentrische Bohrung 18 aufweist. Mittels Dichtungen 16, 17 und 19 sind die Verbindungsstellen zwischen den einzelnen Bauteilen abgedichtet.
Der Übersichtlichkeit halber sind das Absperrventil 21
sowie der Steuerkolben 31 gesondert in dem Zylinderdeckel
11 dargestellt worden.

./.

0040697

Das Absperrventil 21 ist aus dem Ventilkörper 22, der
durch eine Ventilfeder 23 entgegen der Strömungsrichtung
des Druckmittels belastet ist, und der Hülse 14 gebildet.
Dazu sind an einem Bund 24 des Ventilkörpers 22 sowie an
der Hülse 14 Ventilflächen 27 bzw. 28 vorgesehen und der
in einer Bohrung 26 der Hülse 14 geführte Schaft 25 des
Ventilkörpers 23 ist mehreckig ausgebildet, so dass durch
Abheben des Bundes 24 von der Ventilfläche 28 Druckmittel
aus dem Raum 29 über eine Leitung 44 in den Druckraum 6
des Spannzylinders 2 gelangen kann.

Mittels eines angeformten Schaftes 41, in den eine Dichtung 36 eingesetzt und an dem ein Stössel 42 angeformt
ist, ist der Steuerkolben 31 ebenfalls verschiebbar in
der dazu mit einer Bohrung 4o und einer Lauffläche 35
ausgestatteten Hülse 14 gelagert. Die Stirnfläche des
Schaftes 41 bildet somit die kleinere Kolbenfläche 32,
die gegenüberliegende Stirnfläche des Steuerkolbens 31
die grössere Kolbenfläche 33, in die, um einen Druckaufbau bei Anlage des Steuerkolbens 31 an dem Verschlussstopfen 15 zu ermöglichen, eine Eindrehung 43 eingearbeitet ist.
Der von der Hülse 14 und dem Steuerkolben 31 begrenzte Raum
38 ist über eine in dem Zylinderdeckel 11 eingearbeitete
Bohrung 39 entlüftet. Und um zu verhindern, dass Druckmittel aus dem Druckraum 34 in den Raum 38 gelangt, ist
in den Steuerkolben 31 eine Dichtung 37 eingesetzt.

Die Druckmittelzuführung aus der Druckleitung 7, die einen
Druck $P_1$ aufweist, in den Druckraum 6 des Spannzylinders
2 erfolgt, wie es der in Fig. 1 dargestellten Betriebsstellung zu entnehmen ist, über die Leitung 1o und das
Absperrventil 21. Da der Druckraum 34 über die Zweiglei-

./.

leitung 51 und das Wegeventil 52 an die drucklose Leitung 53 mit dem Druck $P_0$ angeschlossen und somit entlüftet ist, wird durch den sich in dem Raum 29 aufbauenden Druck der Steuerkolben 31 nach links und der Ventilkörper 22 entgegen der Kraft der Feder 23 nach rechts
verschoben, so dass das Absperrventil 21 geöffnet ist.
In dem Druckraum 6 des Spannzylinders 2 herrscht demnach ebenfalls der Druck $P_1$ vor.

Zur Absenkung des Druckmitteldruckes in dem Druckraum 6
auf einen Druck $P_2$, der in einer Druckmittelzuführungsleitung 8 gegeben ist, ist zunächst das in die Zweigleitung 51 eingebaute Wegeventil 52 derart zu verstellen, dass die Zweigleitung 51 nicht mehr mit der drucklosen Leitung 53, sondern mit der Druckleitung lo verbunden ist. Dadurch wird der Steuerkolben 31, da sich
in dem Druckraum 34 ein gleich hoher Druck aufbaut wie
in dem Raum 29 gegeben ist, die Kolbenfläche 33 aber erheblich grösser bemessen ist als die Kolbenfläche 32,
nach rechts verschoben. Diese Verschiebung bewirkt, dass
mittels des an dem Schaft 41 angeformten Stössels 42 das
Absperrventil 21 trotz des auf den Ventilkörper 22 einwirkenden in dem Druckraum 6 herrschenden hohen Druck
$P_1$ geöffnet und offengehalten wird.

Wird in dieser Betriebsstellung des Ventilkörpers 22 und
des Steuerkolbens 31 die Druckleitung lo mit Hilfe eines
Umschaltventils 9 an die Druckleitung 8 mit dem Druck $P_2$
angeschlossen, so ist der Druck in dem Druckraum 6 schlagartig auf ein niederes Druckniveau $P_2$ abgesenkt. Durch Entlüften des Druckraumes 34, in dem mittels des Wegeventils
52 die Zweigleitung 51 wiederum an die drucklose Leitung
53 angeschlossen wird, wird daraufhin der Steuerkolben 31, dessen kleinere Kolbenfläche 32 von dem Druckmitteldruck $P_2$ beaufschlagt ist, wiederum nach links verschoben, so dass durch die Kraft der Ventilfeder 23 das Absperrventil 21, sobald keine Druckmittelströmung mehr gegeben ist, sofort geschlossen wird und der Druck in dem Druckraum 6 erneut eingesperrt und die Sicherheitsfunktion wiederum gegeben ist. Der Druck in dem Druckraum 6 bleibt somit erhalten.

Lediglich durch Betätigen des Wegeventils 52, des Umschaltventils 9 - selbstverständlich könnte aber auch eine Druckminderung in der Leitung 7 vorgenommen werden - und erneutem Betätigen des Wegeventils 52 wird somit in äußerst kurzer Zeit eine Absenkung des Druckes in dem Druckraum 6 des Spannzylinders 2 vorgenommen. Das Öffnen des Absperrventils 21 wie auch das Schliessen nach der Druckabsenkung wird hierbei selbsttätig durch den sich in dem Druckraum 34 aufbauenden bzw. abbauenden Druck bewerkstelligt. Dennoch ist sichergestellt, dass der in dem Druckraum 6 jeweils herrschende Druck stets in voller Höhe erhalten bleibt, da das Absperrventil 21 nach einer Druckmittelzufuhr bzw. einer Druckabsenkung sofort, sobald kein Druckmittel mehr strömt, durch die Kraft der Feder 23 geschlossen wird.

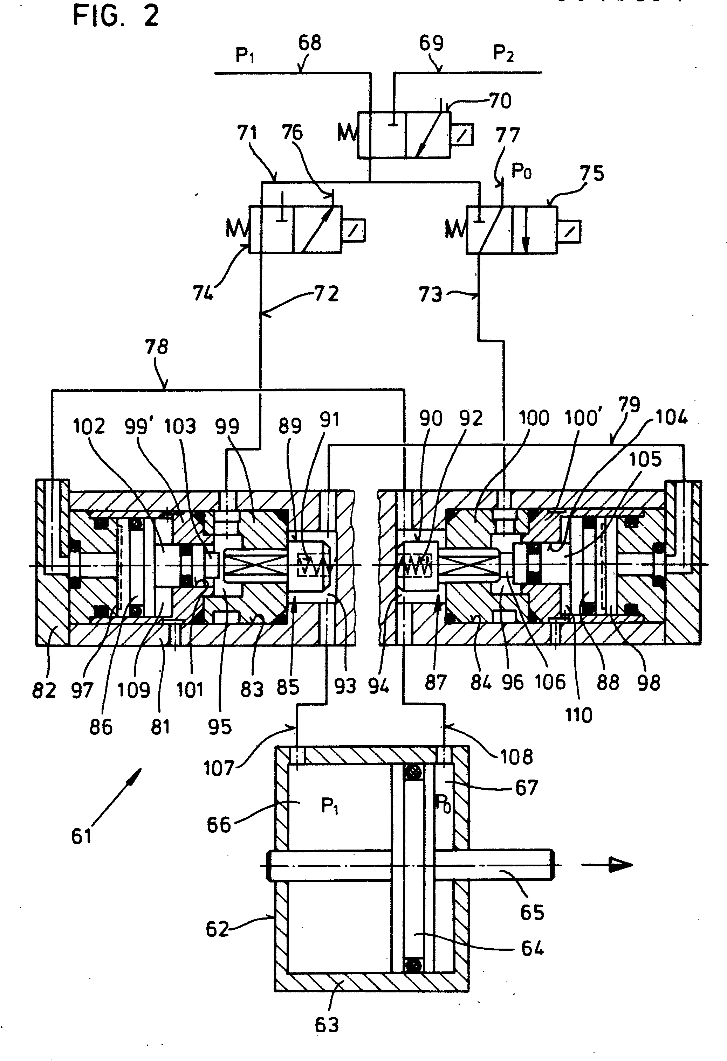

In den Fig. 2 bis 5 ist eine Steuervorrichtung 61 für einen umlaufenden doppelt wirkenden Druckzylinder 62 zur Betätigung von Spannzeugen an Werkzeugmaschinen dargestellt, und zwar jeweils in unterschiedlichen Schaltstellungen. In ein Gehäuse 63 ist hierbei ein beidseitig von Druckmittel beaufschlagbarer Kolben 64 verschiebbar eingesetzt, dessen Kolbenstange 65 beispielsweise mit einem Spannfutter verbunden ist. Durch den Kolben 64 sind somit Zylinderkammern 66 und 67 gebildet, denen Druckmittel über die Leitungen 1o7 und 1o8 zuführbar ist.

./.

.Jeder der Zylinderkammern 66 und 67 ist jeweils ein mit
einem Steuerkolben 86 bzw. 88 versehenes in gleicher
Weise wie bei dem Ausführungsbeispiel nach Fig. 1 ausgebildetes Absperrventil 85 bzw. 87 zugeordnet, die
axial hintereinander in radial gerichteten, in einen
Deckel 81 des Druckzylinders 62 eingearbeiteten Bohrung
83 bzw. 84 eingebaut sind. Der Übersichtlichkeit halber
ist der Zylinderdeckel 81 sowie die Zylinderwandung 82,
in der Druckleitungen 78 bzw. 79 vorgesehen sind, wiederum
gesondert dargestellt.

In Fig. 2 ist die Schaltstellung gezeigt, in der in der
Zylinderkammer 66 des Druckzylinders 62 ein hoher Druck
$P_1$ vorherrscht. Die Druckleitung 68 mit dem Druckmitteldruck $P_1$ ist hierbei über ein Umschaltventil 7o an eine
Leitung 71 angeschlossen, die über ein Wegeventil 74 mit
einer zu dem Absperrventil 85 führenden Leitung 72 verbunden ist.

Die Zylinderkammer 67 dagegen ist entlüftet. Dazu steht
der der grösseren Kolbenfläche des Steuerkolbens 88 zugeordneten Druckraum 98 über die Leitung 79 mit dem Abströmkanal 93 des Absperrventils 85 in Verbindung, so
dass der Steuerkolben 88, dessen angeformter Schaft lo5
in einer Bohrung lo4 einer zweiteiligen Hülse loo, loo',
verschiebbar gelagert ist, mittels des Stössels lo6 auf
den Ventilkörper 9o des Absperrventils 87 einwirkt. Der
Ventilkörper 9o wird dadurch entgegen der Kraft der
Ventilfeder 92 nach links verschoben, so dass das Absperrventil 87 geöffnet ist. Und da der Raum 96 zwischen
dem Ventilkörper 9o und dem Steuerkolben 88 über eine Leitung 73 sowie ein Wegeventil 75 an eine drucklose Leitung
77 mit dem Druckmitteldruck $P_0$ angeschlossen ist, herrscht
somit in der Zylinderkammer 67 ebenfalls der Druck $P_0$.

Ausserdem ist der Abströmkanal 94 des Absperrventils 87, der in diesem Betriebszustand ebenfalls drucklos ist, über die Leitung 78 mit dem Druckraum 97 des Steuerkolbens 86 verbunden. Da jedoch in dem Raum 95 zwischen diesem und dem Ventilkörper 89 des Absperrventils 85 der Druck $P_1$ gegeben ist, wird der Steuerkolben 86 in der linken Endstellung gehalten. Das Absperrventil 85 kann somit bei einer Druckmittelzufuhr in die Zylinderkammer 66 geöffnet werden, sobald jedoch die Druckmittelströmung zum Stillstand kommt, wird durch die Ventilfeder 91 der Ventilkörper 89 in die dargestellte Lage zurückgeschoben, so dass das Absperrventil 85 sofort geschlossen ist und der Druck $P_1$ in der Zylinderkammer 66 erhalten bleibt.

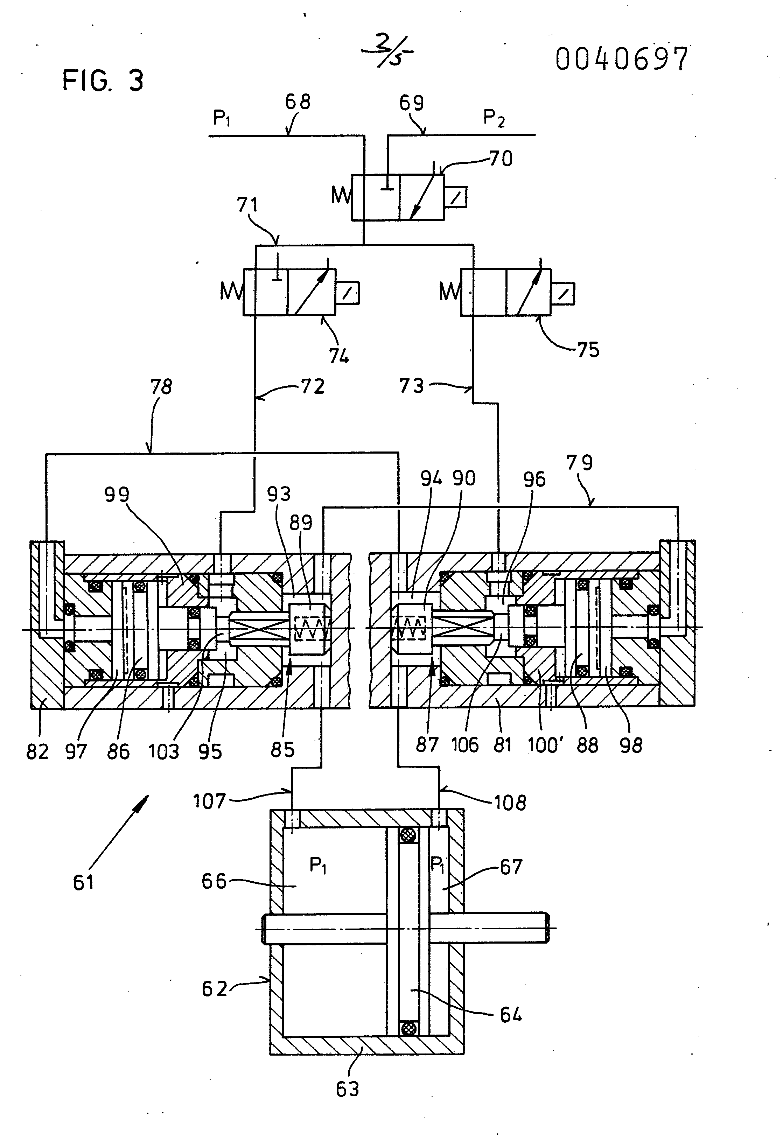

Soll· der Druck in der Zylinderkammer 66 des Druckzylinders 62, um z. B. Schlichtarbeiten auszuführen, auf den in einer Druckmittelleitung 69 gegebenen Druckmitteldruck $P_2$ abgesenkt werden, so ist zunächst, wie es in Fig. 3 dargestellt ist, die Druckleitung 71 mittels des Wegeventils 75 mit der Leitung 73 zu verbinden. Dadurch wird in allen Druckräumen, und zwar auch in dem Druckraum 97 der Druck $P_1$ aufgebaut, so dass durch die in Richtung der Absperrventile 85 und 87 verschobenen Steuerkolben 86 und 88, deren Ventilkörper 89 und 9o mittels der Stössel 1o3 bzw. 1o6 von den Ventilflächen abgehoben werden. Der Ventilkörper 89 sowie der Steuerkolben 86 sind ebenfalls in einer zweiteiligen Hülse 99, 99' verschiebbar gelagert, wobei der Schaft 1o2 in einer Bohrung 1o1 des Hülsenteils 99' gehalten ist. Selbstverständlich sind die Räume 1o9 und 11o zwischen den Hülsen 99' bzw. 1oo' und den Steuerkolben 86 bzw. 88 entlüftet.

./.

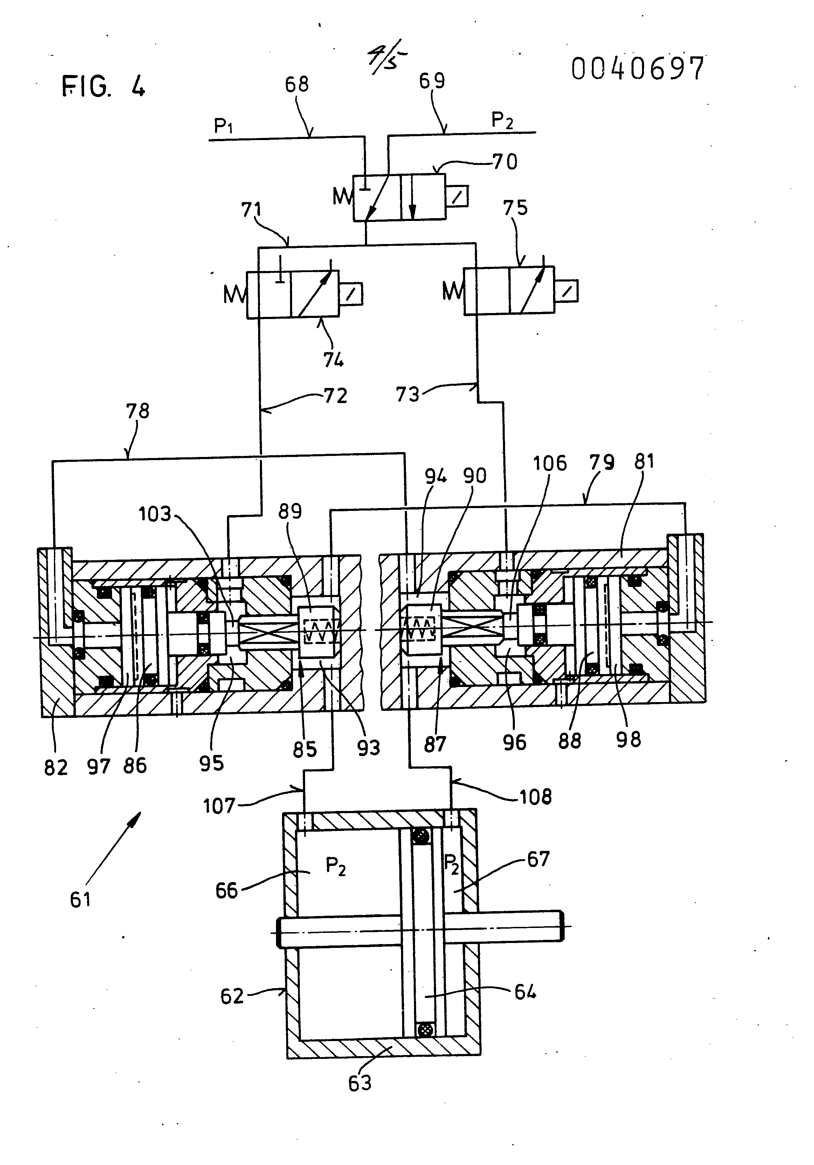

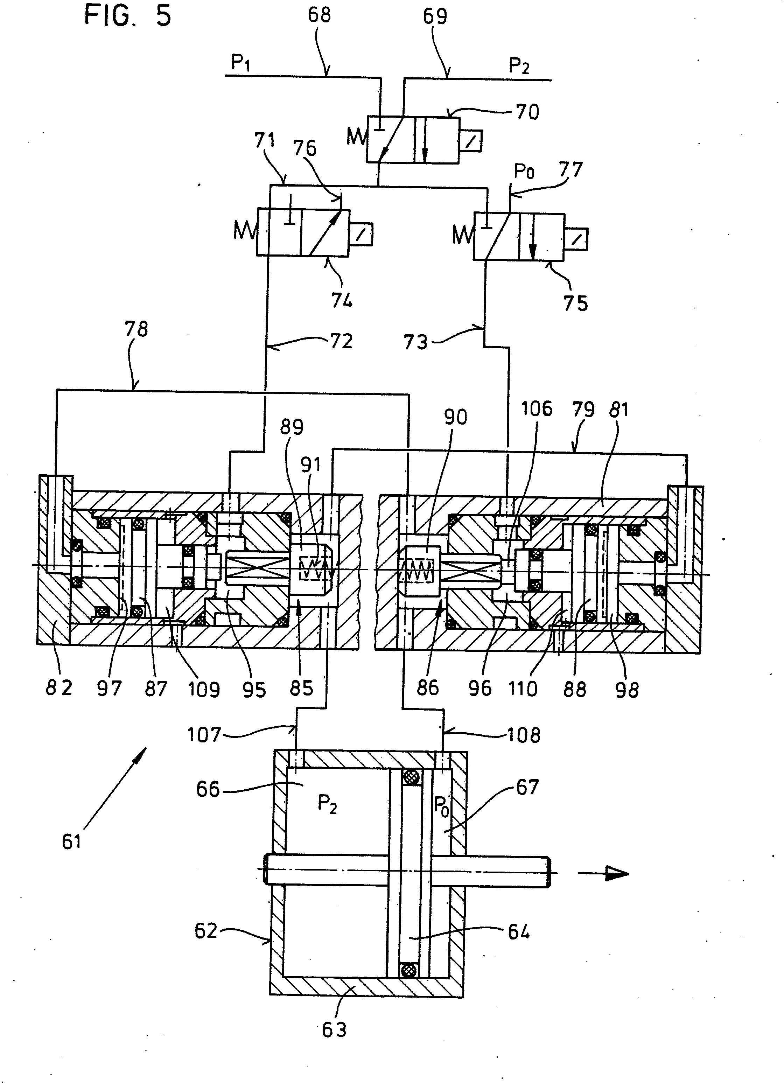

Wird in diesem Betriebszustand der Steuervorrichtung 61
mit Hilfe des Umschaltventils 7o gemäss Fig. 4 die Druckleitung 69 mit dem Druckmitteldruck $P_2$ an die Leitung 71
angeschlossen, so herrscht in beiden Zylinderkammern 66
und 67 sofort der Druck $P_2$. Und wird daraufhin, wie es
in Fig. 5 gezeigt ist, das Wegeventil 75 betätigt und
die Leitung 73 mit der drucklosen Leitung 77 verbunden,
so ist die Zylinderkammer 67 entlüftet und das Absperrventil 85 geschlossen, so dass der in der Zylinderkammer
66 gegebene abgesenkte Druckmitteldruck $P_2$ erhalten bleibt.

Das Wegeventil 74, das in gleicher Weise wie das der
Druckmittelkammer 66 zur Entlüftung zugeordnete Wegeventil
75 zur Druckabsenkung in der Zylinderkammer 67 wirksam ist,
ist ebenfalls mit einer drucklosen Leitung 76 versehen. Auf
diese Weise ist mittels des Druckzylinders 62 sowohl eine
Aussen- als auch eine Innenspannung wie auch eine Druckabsenkung in beiden Zylinderkammern 66 und 67 zu bewerkstelligen.

A 7735  e-m
27. Mai 198o

0040697

SMW Schneider & Weißhaupt GmbH
7996 Meckenbeuren

P a t e n t a n s p r ü c h e :

1. Vorrichtung zur Druckabsenkung in einem Druckraum
eines Spannzylinders od.dgl. mit einem in dessen
Druckmittelzuführungsleitung eingesetzten Absperrventil, dessen Ventilkörper durch die Kraft einer
Feder entgegen der Strömungsrichtung des Druckmittels belastet und durch einen als Differenzkolben
ausgebildeten Steuerkolben verstellbar ist,

d a d u r c h  g e k e n n z e i c h n e t ,

dass der der grösseren Fläche (33) des Steuerkolbens
(31) zugeordnete Druckraum (34) mittels einer Zweigleitung (51) und eines in diese eingesetzten Wegeventils (52) bei einer Druckmittelzuführung in den
Druckraum (6) des Spannzylinders (2) entlüftbar und
bei einer Druckabsenkung an dessen Druckmittelzuführungsleitung (1o) anschliessbar ist.

./.

2. Vorrichtung nach Anspruch 1 für einen umlaufenden doppelt wirkenden Druckmittelzylinder zur Betätigung von Spannzeugen an Werkzeugmaschinen mit zwei Rückschlagventilen, die jeweils in einer Zuleitung zu einer Zylinderkammer angeordnet sind,

d a d u r c h   g e k e n n z e i c h n e t ,

dass jedes Absperrventil (85, 87) mit einem auf dessen Ventilkörper (89, 9o) einwirkenden Steuerkolben (86, 88) versehen ist, deren den grösseren von Druckmittel beaufschlagten Flächen zugeordneten Druckräume (97, 98) ständig mit dem Abströmkanal (94 bzw. 93) des in die Druckmittelzuführungsleitung (72, 73) der anderen Zylinderkammer (66, 67) eingesetzten Absperrventils (85, 87) verbunden sind, und dass in jeder Druckmittelzuführungsleitung (72, 73) ein Wegeventil (74, 75) angeordnet ist, mittels denen bei einer Druckmittelzuführung in eine der Zylinderkammern (66, 67) die andere Zylinderkammer (67, 66) über deren durch den von Druckmittel beaufschlagten Steuerkolben (88, 86) geöffnetem Absperrventil (87, 85) entlüftet und zur Druckabsenkung beide Zylinderkammern (66, 67) über die durch die von Druckmittel beaufschlagten Steuerkolben (86, 88) bei geöffneten Absperrventilen (85, 87) an die Druckmittelzuführungsleitungen (72, 73) anschliessbar sind.

3. Vorrichtung nach Anspruch 2,

d a d u r c h   g e k e n n z e i c h n e t ,

dass die beiden Absperrventile (85, 87) mit den jeweils zugeordneten Steuerkolben (86, 88) einander gegenüberliegend radial oder axial gerichtet in einem Abschlussdeckel (81) des Druckmittelzylinders (62) oder der Zylinderwandung (82) angeordnet sind.

4. Vorrichtung nach einem der Ansprüche 1 bis 3,

d a d u r c h   g e k e n n z e i c h n e t ,

dass der Ventilkörper (22; 89, 9o) des Absperrventils
(21; 85, 87) und der Steuerkolben (31; 86, 88) jeweils
axial hintereinander in einer ein- oder mehrteiligen
Hülse (14; 99, 99', loo, loo') verschiebbar angeordnet sind.

5. Vorrichtung nach einem der Ansprüche 1 bis 4,

d a d u r c h   g e k e n n z e i c h n e t ,

dass die auf den Ventilkörper (22; 89, 9o) des Absperrventils (21; 85, 87) einwirkende Feder (23; 91, 92) in
ihrer Kraft geringfügig grösser bemessen ist, als der
Ventilkörper (22; 89, 9o) in seinem Gewicht.

6. Vorrichtung nach einem der Ansprüche 1 bis 5,

d a d u r c h   g e k e n n z e i c h n e t ,

dass den Wegeventilen (52; 74, 75) zum Anschluss der
Druckleitungen (lo; 72, 73) an Druckmittel in unterschiedlichen Druckhöhen führende Leitungen (7, 8;
68, 69) ein Umschalt-Ventil (9; 7o) vorgeschaltet
ist.

A 7735  e-m
19. Mai 198b

FIG. 1

FIG. 2

FIG. 3

FIG. 4

0040697

0040697

FIG. 5

**Europäisches Patentamt**

**EUROPÄISCHER RECHERCHENBERICHT**

00406 97

Nummer der Anmeldung

EP 81 10 3084

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| XP | US - A - 4 221 160 (SELDEN)  * Ganzes Dokument * | 1-6 | F 15 B 13/01 B 23 B 31/30 |
| X | US - A - 3 908 383 (SELDEN)  * Spalte 4, Zeilen 21-52; Spalte 5, Zeilen 23-28; Spalte 6, Zeilen 12-21; Spalte 8, Zeile 51 - Spalte 9, Zeile 24; Spalte 10, Zeile 50 - Spalte 11, Zeile 16; Figuren *  & DE - A - 2 528 729 | 1,2 | |
| | US - A - 3 364 823 (BENJAMIN et al.)  * Figur 3 * | 3 | RECHERCHIERTE SACHGEBIETE (Int. Cl.³)  F 15 B B 23 B B 23 Q |
| | DE - A - 1 477 865 (VEB SPEZIAL-WERKZEUGFABRIK)  * Figur 1 * | 3 | |
| | DE - A - 1 945 951 (KLOCKNER-WERKE)  * Figur 2 * | 4 | |
| A | US - A - 3 735 670 (SMITHSON) | | KATEGORIE DER GENANNTEN DOKUMENTE  X: von besonderer Bedeutung |
| A | US - A - 3 730 539 (SWANSON) | | A: technologischer Hintergrund  O: nichtschriftliche Offenbarung |
| A | US - A - 3 091 256 (BECKER) | | P: Zwischenliteratur  T: der Erfindung zugrunde liegende Theorien oder Grundsätze |
| AD | DE - A - 2 245 796 (FORKARDT) | | E: kollidierende Anmeldung  D: in der Anmeldung angeführtes Dokument  L: aus andern Gründen angeführtes Dokument  &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 28-08-1981 | THOMANN |

EPA form 1503.1 06.78